Europäisches Patentamt

European Patent Office

Office européen des brevets

(19)

(11) Veröffentlichungsnummer : **0 123 701**
**B1**

(12) **EUROPÄISCHE PATENTSCHRIFT**

(45) Veröffentlichungstag der Patentschrift :
08.07.87

(51) Int. Cl.⁴ : **G 03 F   3/08**

(21) Anmeldenummer : 83104101.7

(22) Anmeldetag : 27.04.83

(54) **Verfahren und Einrichtung zur Herstellung von Farbbildern.**

(43) Veröffentlichungstag der Anmeldung :
07.11.84 Patentblatt 84/45

(45) Bekanntmachung des Hinweises auf die Patenterteilung : 08.07.87 Patentblatt 87/28

(84) Benannte Vertragsstaaten :
AT BE CH DE FR GB IT LI NL SE

(56) Entgegenhaltungen :
WO-A-80 /024 67
DE-A- 2 054 099
DE-A- 2 328 874
DE-A- 2 621 008
FR-A- 2 394 114
GB-A- 2 032 727
TELCOM REPORT, Band 4, Nr. 3, Juni 1981, Seiten 259-263, Passau, DE. E. HENNIG: "Elektronische Bildverarbeitung in der Reproduktionstechnik"

(73) Patentinhaber : DR.-ING. RUDOLF HELL GmbH
Grenzstrasse 1-5
D-2300 Kiel 14 (DE)

(72) Erfinder : Giesche, Ernst
Kraenberg 7
D-2314 Lilienthal (DE)
Erfinder : Jung, Eggert
Mühlenberg 25
D-2306 Schönberg (DE)
Erfinder : Meintz, Helma
Augustenthal 16a
D-2314 Schönkirchen (DE)
Erfinder : Roes, Christian
Starnberger Strasse 92
D-2300 Kiel 14 (DE)

## Beschreibung

Die Erfindung bezieht sich auf die elektronische Reproduktionstechnik und betrifft ein Verfahren und eine Einrichtung zur Herstellung von Farbbildern, insbesondere von Zweitvorlagen für den Mehrfarbendruck.

In der Reproduktionstechnik für den Mehrfarbendruck werden vor der Herstellung der Farbauszüge sogenannte Zweitvorlagen von Original-Vorlagen angefertigt. Diese Zweitvorlagen sind gegenüber den Original-Vorlagen farbkorrigiert, im Dichteumfang angepaßt, d. h. dichtemäßig standardisiert, und ggf. auf das Endformat vergrößert. Die Zweitvorlagen können Aufsichts-Zweitvorlagen sein, welche farblich weitestgehend dem späteren Druckergebnis entsprechen und als druckverbindliche Zweitvorlagen, die z. B. dem Auftraggeber zur Beurteilung und zur Freigabe des Druckauftrages zugeschickt werden, oder als Proofs für die Qualitätskontrolle beim Mehrfarbendruck Verwendung finden. Die Zweitvorlagen können auch Durchsichts-Zweitvorlagen sein, z. B. von Original-Dias hergestellte Duplikat-Dias, welche ebenfalls zur Reproduktionskontrolle dienen.

Bei den herzustellenden Farbbildern kann es sich aber auch um einfache Farbkopien von Farbbild-Originalen handeln, die von Entwicklungs- oder Reproduktionsanstalten angefertigt werden.

Zur Herstellung solcher Farbkopien finden bisher Kopiergeräte, zur Herstellung hochwertiger Zweitvorlagen Reproduktionskameras Anwendung, mit denen die Original-Vorlagen jeweils als Ganzes auf das Farbmaterial übertragen werden. Zur einfachen Farbkorrektur bei Farbkopien werden Farbfilter in den Belichtungsweg eingebracht, um beispielsweise den Gesamtfarbstich einer Original-Vorlage zu kompensieren. Um eine hochwertigere Farbkorrektur bei Zweitvorlagen zu erreichen, müssen Kontrast- und Farb-Korrekturmasken erstellt und in den Belichtungsweg eingeschaltet werden. Um die Original-Vorlagen auf das Endformat zu bringen, kommen zusätzlich noch Vergrößerungskameras zum Einsatz. Schließlich sind zur Herstellung bestimmter Zweitvorlagen noch umständliche Zwischenprozesse erforderlich.

Die herkömmlichen Verfahren zur Herstellung von Farbbildern haben somit den Nachteil, daß sie unter anderem wegen der zusätzlichen Anfertigung von Korrekturmasken und Zwischennegativen aufwendig sind und keine optimale Farbkorrektur ermöglichen. Hinzu kommt, daß bei einer gegenüber der Original-Vorlage vergrößerten Zweitvorlage ein Schärfeverlust eintreten kann.

In der DE-A-2 328 874 wird bereits ein elektronisches Aufzeichnungsgerät für Zwischenbilder von Farbvorlagen beschrieben, das aus einem Farb-Abtaster, einer Signalverarbeitungs-Schaltung und einer Farb-Aufzeichnungseinheit besteht. In der Signalverarbeitungs-Schaltung werden die durch Abtastung der Farbvorlage im Farb-Abtaster gewonnenen Farbwerte in Ansteuerwerte für die Farb-Aufzeichnungseinheit umgewandelt. Dieser Druckschrift kann aber nicht entnommen werden, wie diese Umwandlung der Farbwerte in Ansteuerwerte im einzelnen erfolgt, um auf dem Farbmaterial unter Berücksichtigung der Gradationen in den Farbschichten bestimmte Farben zu erzeugen.

Aus der WO-A-8 002 467 ist lediglich eine Farb-Aufzeichnungseinheit zur Belichtung von Farbmaterial mit Laserlicht bekannt. Das Laserlicht wird durch Bilddaten moduliert, die in einem Computer erzeugt werden. Diese Druckschrift enthält aber keinerlei Hinweise auf die Erzeugung der Bilddaten im Computer.

Der Erfindung liegt daher die Aufgabe zugrunde, zur Behebung der genannten Nachteile ein Verfahren und eine Anordnung zur Aufzeichnung von Farbbildern anzugeben, mit denen hochwertige Farbbilder, insbesondere Zweitvorlagen, von Farbvorlagen hergestellt werden können.

Diese Aufgabe wird bezüglich des Verfahrens durch die Merkmale des Anspruchs 1 und bezüglich der Anordnung durch die Merkmale des Anspruchs 12 gelöst.

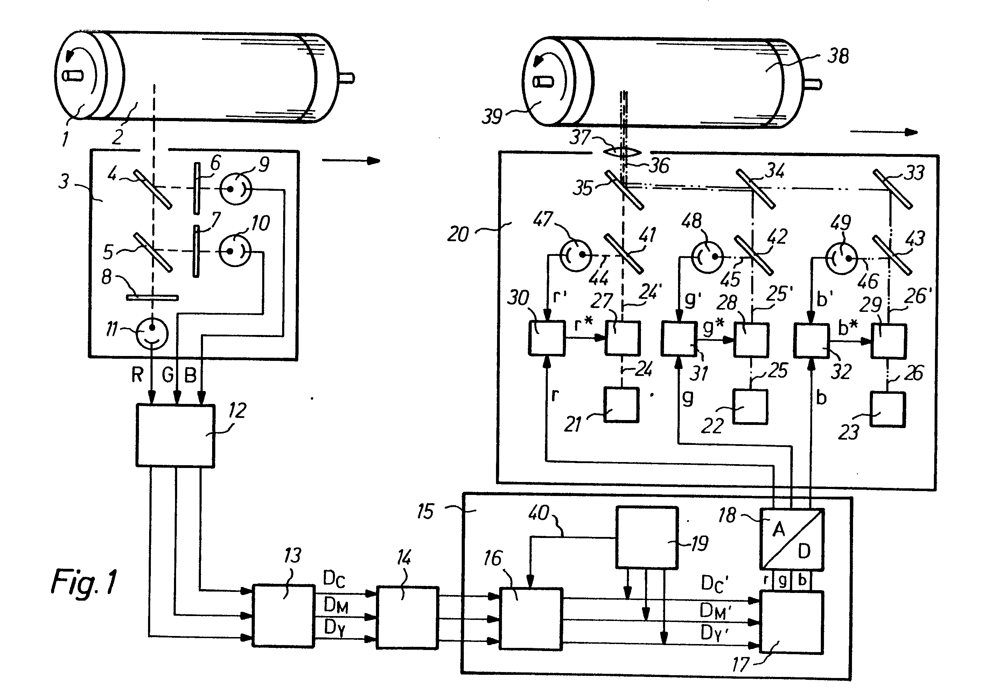

Die Erfindung wird im folgenden anhand der Figur näher erläutert.

Die Figur zeigt ein Ausführungsbeispiel einer Farbbild-Aufzeichnungsanordnung mit einer Farb-Aufzeichnungseinheit für Farbmaterial.

Auf einer rotierenden Abtasttrommel 1 einer nicht näher dargestellten Anordnung ist eine Farbvorlage 2 aufgespannt. Die Farbvorlage 2 kann eine Original-Farbvorlage, von der ein korrigiertes Farbbild herzustellen ist, oder ein bereits reproduziertes Farbbild sein, von dem lediglich eine Kopie angefertigt werden soll. Die Farbvorlage 2 kann als Aufsichts- oder Durchsichts-Vorlage sowie als Farbpositiv oder als Farbnegativ vorliegen.

Ein optoelektronisches Abtastorgan 3, das sich axial an der Abtasttrommel 1 entlangbewegt, tastet die Farbvorlage 2 punkt- und zeilenweise ab. Das von der Farbvorlage 2 kommende Abtastlicht wird durch zwei dichroitische Farbteiler 4 und 5 und drei Farbfilter 6, 7 und 8 in drei Farbanteile aufgespalten und in optoelektronischen Wandlern 9, 10 und 11 in Farbwerte umgewandelt. Im Ausführungsbeispiel sind die Farbwerte die primären Farbmeßwerte R, G und B, auch Filterwerte genannt, welche die Farbanteile « Rot » « Grün » und « Blau » der abgetasteten Farbpunkte darstellen. Die Farbwerte können aber auch aus Spektralwerten abgeleitet sein. In diesem Falle ist das Abtastorgan 3 als Spektralmeßeinrichtung ausgebildet.

Im Abtastorgan 3 lassen sich zusätzlich mit den bekannten Mitteln der elektronischen Unscharfmaskierung Schärfe- bzw. Kontrast-Korrekturen an der abgetasteten Farbvorlage vornehmen, was bei Verwendung einer herkömmlichen Reproduktionskamera zur Farbbild-Reproduktion nicht möglich ist.

Die im Abtastorgan 3 gewonnenen Farbmeßwerte R, G und B werden in einer Logarithmier-Stufe 12 logarithmiert und in einer nachgeschalteten Korrektur-Stufe 13 nach einer frei wählbaren Korrekturfunktion $f_1$ unter Berücksichtigung der Gesetzmäßigkeiten der subtraktiven Farbmischung gemäß Gleichung (1) in Farbdichtewerte $D_Y$, $D_M$ und $D_C$ korrigiert.

$$D_Y, D_M, D_C = f_1(R, G, B) \qquad (1)$$

Alternativ können die Farbmeßwerte R, G und B in der Korrektur-Stufe 13 auch in Farbauszugswerte (Y, M, C) oder in Spektralwerte (X, Y, Z) umgewandelt werden. Die in der Korrektur-Stufe 13 gewonnenen Farbwerte werden in zweckmäßiger Weise zur Anzeige gebracht, um dem Bediener die Wertekontrolle zu erleichtern.

Die Korrektur-Stufe 13 kann als analoge Signalverarbeitungsschaltung nach der DE-B-26 07 623, aber auch als digitale Signalverarbeitungsschaltung mit einem Speicher, beispielsweise mit einem Zuordnungs-Speicher nach der DE-B-10 53 311, ausbildet sein, in dem jedem theoretisch möglichen Farbmeßwert-Tripel ein entsprechendes Farbdichtewert-Tripel zugeordnet ist. Alternativ dazu kann ein Stützwert-Speicher mit einer geringeren Speicherkapazität als die des Zuordnungs-Speichers und eine Interpolations-Stufe nach der DE-B-26 21 008 vorhanden sein. In diesem Falle werden alle zur Farbbild-Belichtung benötigten Zuordnungen von Farbmeßwert-Tripeln und Farbdichtewert-Tripeln durch eine Interpolationsrechnung aus den im Stützwert-Speicher abgelegten Stützwerten ermittelt.

Falls als Korrektur-Stufe 13 ein Farbkorrektur-Rechner für den Vierfarbendruck Verwendung findet, werden aus den Farbauszugswerten (K) für den Farbauszug « Schwarz » entsprechende Schwarzwerte errechnet und den Farbauszugswerten (Y, M, C) für die Farbauszüge « Gelb », « Magenta » und « Cyan » korrigierend hinzugefügt.

Der Korrektur-Stufe 13 ist eine Speicher-Schaltung 14 für die Farbwerte nachgeschaltet. Die Speicher-Schaltung 14 kann z. B. für den Fall, daß das Farbbild mit einem gegenüber der Original-Vorlage geänderten Reproduktionsmaßstab aufgezeichnet werden soll, eine Schaltung zur elektronischen Änderung des Reproduktionsmaßstabes nach DE-PS 11 93 534 sein, bei der die digitalisierten Farbwerte mit einem Schreibtakt in einen Zeilenspeicher eingeschrieben und mit einem Lesetakt wieder ausgelesen und weiterverarbeitet werden, wobei das Frequenzverhältnis von Schreib- und Lesetakt den gewünschten Reproduktionsmaßstab bestimmt. Mit Hilfe der elektronischen Maßstabsänderung lassen sich bei der Farbbild-Reproduktionseinrichtung in vorteilhafter Weise die Nachteile der herkömmlichen Reproduktionskamera (Streulicht, Bildverzerrung usw. ) vermeiden.

Die Speicher-Schaltung 14 kann aber auch ein Ganzbild-Speicher sein, in dem alle Farbwerte einer Vorlage oder einer aus Einzelvorlagen montierten Seite abgelegt sind.

Der Speicher-Schaltung 14 ist ein Farb-Umsetzer 15 nachgeschaltet, der im dargestellten Ausführungsbeispiel aus einer weiteren Korrektur-Stufe 16, einer Linearisierungs-Stufe 17, einem D/A-Wandler 18 und aus einem Farbdichte-Geber 19 besteht.

Von den aus der Speicher-Schaltung 14 ausgelesenen Farbdichtewerten $D_Y$, $D_M$ und $D_C$ werden in dem Farb-Umsetzer 15 analoge Ansteuerwerte r, g und b für eine Farb-Belichtungseinheit 20 gewonnen. Aufbau und Wirkungsweise des Farb-Umsetzers 15 werden später ausführlich erläutert.

Die Farb-Belichtungseinheit 20 weist im Ausführungsbeispiel drei Laser 21, 22 und 23 auf, welche monochromatisches Laserlicht aus dem roten, dem grünen und dem blauen Spektralbereich erzeugen. Der Laser 21 ist z. B. ein HeNe-Laser mit der Wellenlänge 633 nm (Rot). Die Laser 22 und 23 sind beispielsweise Ar-Laser mit der Wellenlänge 514 nm (Grün) bzw. 476 nm (Blau).

Alternativ könnte ein Multiline-Laser Verwendung finden, welcher schmalbandiges Laserlicht aus allen drei Spektralbereichen erzeugt. Der rote, blaue und grüne Laserstrahl 24, 25 und 26 werden in Lichtmodulatoren 27, 28 und 29 in Abhängigkeit von Ansteuerwerten r*, g* und b* selektiv intensitätsmoduliert. Die Lichtmodulatoren sind z. B. akustooptische Modulatoren (AOM). Die Ansteuerwerte r*, g* und b* werden in Steuerverstärkern 30, 31 und 32 aus den im Farb-Umsetzer 15 gewonnenen Ansteuerwerten r, g und b abgeleitet.

Die intensitätsmodulierten Laserstrahlen 24', 25' und 26' werden mit Hilfe eines Spiegels 33 und zweier dichroitischer Farbteiler 34 und 35 in einem Aufzeichnungsstrahl 36 vereinigt. Der Aufzeichnungsstrahl 36 wird mittels eines Objektivs 37 auf ein Farbmaterial 38 fokussiert, welches auf eine ebenfalls rotierende Aufzeichnungstrommel 39 der Farbbild-Reproduktionseinrichtung aufgespannt ist.

Durch eine axiale Bewegung der Farb-Belichtungseinheit 20 entlang der Auszeichnungstrommel 39 belichtet der Aufzeichnungsstrahl 36 punkt- und zeilenweise das Farbmaterial 38, wobei jeder Laserstrahl eine der drei Farbschichten des Farbmaterials 38 anspricht. Das belichtete und entwickelte Farbmaterial 38 ist das gewünschte Farbbild bzw. die gewünschte Zweitvorlage.

In der Farb-Belichtungseinheit 20 kann als Lichtquelle auch z. B. eine Xenon-Lampe verwendet werden. Das Licht der Xenon-Lampe wird dann mittels Farbfilter in einen roten, einen grünen und einen blauen Lichtstrahl aufgeteilt, deren Intensitäten durch die Ansteuerwerte r, g und b moduliert werden.

Selbstverständlich kann die Farbbild-Reproduktionseinrichtung auch als Flachbett-Gerät ausgebildet sein.

Nachfolgend werden die einzelnen Funktionen des Farb-Umsetzers 15 näher beschrieben.

Farb- und/oder Tonwertkorrektur

In der Korrektur-Stufe 16 des Farb-Umsetzers 15 werden die Farbdichtewerte $D_Y$, $D_M$ und $D_C$ durch eine weitere Farb- und/oder Tonwertkorrektur nach einer Korrekturfunktion « $f_2$ » gemäß Gleichung (2) in Soll-Farbdichtewerte $D'_Y$, $D'_M$ und $D'_C$ umgesetzt.

$$(D'_Y, D'_M, D'_C) = f_2(D_Y, D_M, D_C) \qquad (2)$$

Jedes Tripel von Soll-Farbdichtewerten $D'_Y$, $D'_M$ und $D'_C$ gibt diejenigen Farbdichten bzw. Farbstoffkonzentrationen an, die in den einzelnen Farbschichten des zu belichtenden Farbmaterials erreicht werden müssen, um eine bestimmte Filmfarbe zu erzeugen.

Falls die Korrektur-Stufe 13, wie bereits erwähnt, anstelle von Farbdichtwerten ($D_Y$, $D_M$, $D_C$) Farbauszugswerte (Y, M, C) oder Spektralwerte (X, Y, Z) ausgibt, werden diese in der Korrektur-Stufe 16 gleichzeitig in die Soll-Farbdichtewerte $D'_Y$, $D'_M$ und $D'_C$ umgesetzt.

Die Korrektur-Stufe 16 ist in zweckmäßiger Weise ebenfalls als digitale Signalverarbeitungsschaltung mit Speicher aufgebaut. Selbstverständlich können die beiden Korrektur-Stufen 13 und 16 auch funktionsmäßig zusammengefaßt sein. In diesem Falle werden die Farbmeßwertsignale R, G und B gleich in die entsprechenden Soll-Farbdichtewerte $D'_Y$, $D'_M$ und $D'_C$ umgesetzt.

Durch die freie Einstellbarkeit der Korrekturfunktionen « $f_1$ » und « $f_2$ » lassen sich bei der Farbbild-Reproduktionseinrichtung im Gegensatz szur herkömmlichen Farbbild-Reproduktionskamera optimale Korrekturen an der zu reproduzierenden Vorlage erzielen. In zweckmäßiger Weise wird man in der Korrektur-Stufe 13 eine Standard-Korrekturfunktion « $f_1$ » eingeben und jeweils eine individuell an die momentan zu reproduzierende Vorlage angepaßte Fein- oder Nachkorrektur, insbesondere auch eine partielle Korrektur, durch Einstellen der Korrekturfunktion « $f_2$ » in der Korrektur-Stufe 16 des Farb-Umsetzers 15 vornehmen.

Es erweist sich als vorteilhaft, die als optimal herausgefundenen Korrekturparameter für die Belichtung eines Farbbildes von einer Original-Vorlage zu archivieren und im Falle, daß nochmals ein Farbbild von dieser Original-Vorlage angefertigt werden soll, wieder in die entsprechenden Korrektur-Stufen der Farbbild-Reproduktionseinrichtung zu laden.

Ebenso erweist es sich als zweckmäßig, vor oder nach der eigentlichen Farbbild-Belichtung charakteristische Farbfelder, sogenannte Eichfelder, auf das Farbmaterial bzw. an den Rand des Farbbildes zu belichten. Mit Hilfe dieser Farbfelder werden beispielsweise in der Korrektur-Stufe 16 die für eine Nachkorrektur erforderlichen Korrekturparameter als Stützwerte für eine Interpolationsrechnung eingestellt, falls von einem bereits reproduzierten Farbbild zu einem späteren Zeitpunkt nochmals eine farbgleiche Kopie hergestellt werden soll. Zur Belichtung solcher Farbfelder ruft der Farbdichte-Geber 19 des Farb-Umsetzers 15 für jedes zu belichtende Farbfeld ein Tripel von Farbdichtewerten $D'_Y$, $D'_M$ und $D'_C$ auf, welches an die Farb-Belichtungseinheit 20 gegeben wird und die Farbe des Farbfeldes bestimmt. Bei der späteren Herstellung der Farbbild-Kopie wird das mit den Farbfeldern versehene Farbbild nochmals auf die Abtasttrommel 1 der Farbbild-Reproduktionseinrichtung aufgespannt. Das Abtastorgan 3 tastet zunächst nur die einzelnen Farbfelder ab und erzeugt für jedes abgetastete Farbfeld ein Tripel von Farbmeßwerten R, G und B bzw. ein Tripel von Farbdichtewerten $D_Y$, $D_M$ und $D_C$ am Eingang der Korrektur-Stufe 16. Synchron mit der Abtastung der Farbfelder werden die zur Belichtung der Farbfelder benutzten Tripel von Farbdichtewerten $D'_Y$, $D'_M$ und $D'_C$ nochmals aus dem Farbdichte-Geber 19 ausgegeben und über einen Bus 40 an die Korrektur-Stufe 16 transferiert. In der Korrektur-Stufe 16 werden dann für die einzelnen Farbfelder paarweise die durch Abtastung der Farbfelder gewonnenen Tripel von Farbdichtewerten $D_Y$, $D_M$ und $D_C$ und die zur Belichtung der Farbfelder benutzten Tripel von Farbdichtewerten $D'_Y$, $D'_M$ und $D'_C$ einander zugeordnet und gespeichert, wodurch die Herstellung einer farbgleichen Kopie von einem Farbbild sichergestellt ist. Durch ein bereichsweises Ändern der Zuordnung von Farbdichtewerten kann außerdem in vorteilhafter Weise eine partielle Korrektur durchgeführt werden.

Auf diese Weise wird eine schnelle und reproduzierbare Einstellung der Korrekturparameter erreicht, wobei gleichzeitig die durch Farbsensibilisierung und Entwicklung bedingten Fehler sowie Streuungen der Abtastlichtquelle und der optischen Eigenschaften der Filter kompensiert werden.

Linearisierungsprozeß

Durch den Linearisierungsprozeß werden die Soll-Farbdichtewerte $D'_Y$, $D'_M$ und $D'_C$ derart in die Ansteuerwerte r, g und b für die farbigen Laserstrahlen der Farb-Belichtungseinheit 20 umgewandelt, daß die den Soll-Farbdichtewerten entsprechenden Farbstoffkonzentrationen bzw. Farben auch tatsächlich auf dem Farbmaterial entstehen.

Die Ansteuerwerte r, g und b bestimmen die Lichtintensitäten des roten, des grünen und des blauen Laserstrahls 24', 25' und 26' und damit die Lichtenergien, die in die Farbschichten des Filmmaterials gelangen. Die Lichtenergien ihrerseits bestimmen letztlich die Farbstoffkonzentrationen bzw. Ist-Farbdichten in den Farbschichten des belichteten Farbmaterials.

Der Zusammenhang zwischen den Ansteuerwerten r, g und b und den Lichtenergien ist nichtlinear. Ebenso nichtlinear ist der Zusammenhang zwischen den Lichtenergien und den auf dem Farbmaterial erreichten Farbdichten aufgrund der Farbgradationen des Farbmaterials.

Ein linearer Zusammenhang zwischen den Ansteuerwerten r, g und b und den Lichtenergien wird in der Farb-Belichtungseinheit 20 durch eine Lichtregelung der Laserstrahlen 24', 25' und 26' erreicht.

Zur Istwert-Erfassung der Strahlintensitäten werden aus den drei Laserstrahlen 24', 25' und 26' mittels teildurchlässiger Spiegel 41, 42 und 43 Teilstrahlen 44, 45 und 46 ausgespiegelt und deren Intensitäten durch Fotodioden 47, 48 und 49 als Istwerte r', g' und b' gemessen. Die in dem Farb-Umsetzer 15 erzeugten Ansteuerwerte r, g und b bilden die Sollwerte für die Lichtregelung. Durch Vergleich von Istwerten und Sollwerten in den Steuerverstärkern 30, 31 und 32 werden die Ansteuerwerte r*, g* und b* für die Lichtmodulatoren 27, 28 und 29 erzeugt.

Die Kompensation der durch die Gamma-Werte bzw. durch die Farbgradation des verwendeten Farbmaterials bedingten Nichtlinearität erfolgt in der Linearisierung-Stufe 17 des Farb-Umsetzers 15, indem nach Gleichung (3) die Linearisierungsfunktion « $f_3$ » bestimmt wird.

$$r, g, b = f_3(D'_Y, D'_M, D'_C) \qquad (3)$$

Zur Farbdichte-Linearisierung wird zunächst für jede Farbschicht des Farbmaterials ein Farbkeil in Form von gestuften Ist-Farbdichtewerten auf das Farbmaterial belichtet und dichtemäßig ausgemessen. Im Ausführungsbeispiel erzeugt der Farbdichte-Geber 19 des Farb-Umsetzers 15 in zeitlicher Folge ebenfalls gestufte Soll-Farbdichtewerte $D'_Y$, $D'_M$ und $D'_C$, die in der Linearisierungs-Stufe 17 in entsprechende Ansteuerwerte r, g und b für die Belichtung der Farbkeile umgewandelt werden, wobei die Linearisierungs-Stufe 17 zunächst linear wirkt. Den ausgemessenen Ist-Farbdichtewerten der Farbkeile werden jeweils diejenigen Ansteuerwerte r, g und b funktionsmäßig zugeordnet, mit denen die betreffenden Ist-Dichtewerte auf dem Farbmaterial erreicht wurden. Die Umkehrfunktion stellt die Farbgradations-Kurve des Farbmaterials dar, aus der die für den linearen Zusammenhang erforderlichen korrigierten Ansteuerwerte r, g und b ermittelt und den Soll-Farbdichtewerten $D'_Y$, $D'_M$ und $D'_C$ in der Linearisierungs-Stufe 17 zugeordnet werden.

Die Linearisierungs-Stufe 17 kann z. B. einen ladbaren Speicher (RAM) enthalten, in den die aus dem Linearisierungsvorgang ermittelten korrigierten Ansteuerwerte r, g und b abgelegt und während der Farbbild-Belichtung von den zugeordneten Soll-Farbdichtewerten $D'_Y$, $D'_M$ und $D'_C$ aufgerufen werden.

Durch die Lichtregelung einerseits und die Farbdichte-Linearisierung andererseits wird somit erreicht, daß Soll-Farbdichten und Ist-Farbdichten auf dem Farbmaterial übereinstimmen.

Berücksichtigung der Art des Farbmaterials

Mit Hilfe des Farb-Umsetzers 15 kann das Farbbild in vorteilhafter Weise unabhängig von der Art der abgetasteten Vorlage wahlweise auf Aufsichts- oder Durchsichts-Farbmaterial belichtet werden. Als Farbmaterial können jede Art von Farbfilmen, z. B. Positiv-Filme, Negativ-Filme oder Umkehrfilme, sowie Fotopapier verwendet werden. Ein üblicher Farbfilm besteht unabhängig davon, ob es sich um einen positiv- oder Negativ-Farbfilm handelt, aus einer für den roten Spektralbereich sensibilisierten Cyan-Farbschicht, einer für den grünen Spektralbereich sensibilisierten Magenta-Schicht und einer für den blauen Spektralbereich sensibilisierten Gelb-Farbschicht. Dabei wirken der in der Farb-Belichtungseinheit 20 erzeugte rote, grüne und blaue Laserstrahl selektiv auf die sensibilisierten Farbschichten ein und bestimmen die Bildung oder Nichtbildung der Farbstoffkonzentrationen in den Farbschichten, welche für die Entstehung der Filmfarben verantwortlich sind.

In der Linearisierungs-Stufe 17 wird daher gleichzeitig eine auf die übliche Filmsensibilisierung abgestellte Zuordnung von Soll-Farbdichtewerten ($D'_Y$, $D'_M$, $D'_T$) und Ansteuerwerten (r, g, b) für die farbigen Laserstrahlen gemäß Gleichung (4) hergestellt.

$$\begin{aligned} r &= f_{3r}(D'_C) \\ g &= f_{3g}(D'_M) \qquad (4) \\ b &= f_{3b}(D'_Y) \end{aligned}$$

Selbstverständlich können in der Linearisierungs-Stufe 17 auch andere Zuordnungen vorgenommen werden.

Umkehr des Reproduktionsprozesses

Mit Hilfe des Farb-Umsetzers 15 können Farbpositive als Farbnegative oder umgekehrt aufgezeichnet werden.

Bei einem Negativ-Farbmaterial wird durch Belichten einer Farbschicht mit steigender Lichtintensität die Farbstoffkonzentration in der betreffenden Farbschicht erhöht, durch Nicht-Belichten einer Farbschicht wird diese dagegen ausgeschaltet, d. h. nicht wirksam. Bei einem Positiv-Farbmaterial sinkt die Farbstoffkonzentration mit der Intensität der Belichtung, so daß eine Farbschicht durch Belichtung mit voller Lichtintensität ausgeschaltet wird. Durch eine Invertierung der Ansteuerwerte r, g und b in der Linearisierungs-Stufe 17 kann daher in vorteilhafter Weise eine Reproduktions-Umkehr bei der Farbbild-Belichtung durchgeführt werden.

So läßt sich der Belichtungsprozeß durch die Änderung der Farbdichtewerte nach einer beliebig wählbaren Korrekturfunktion in der Korrektur-Stufe 16 und durch die ebenfalls einstellbare Signalinvertierung in der Linearisierungs-Stufe 17 unabhängig von der Art der zu reproduzierenden Vorlage und dem Zustand des Entwicklungsprozesses in vorteilhafter Weise an jedes Farbmaterial anpassen.

In der Figur ist die Farbbild-Reproduktionseinrichtung als konstruktive Einheit mit einem Abtastteil und einem Belichtungsteil dargestellt. Selbstverständlich kann eine solche Farbbild-Reproduktionseinrichtung auch aus einem funktionsmäßig separaten Farb-Abtaster und einem ebenfalls funktionsmäßig separaten Farb-Recorder bestehen.

Farb-Abtaster und Farb-Recorder können dann, wie in der Figur dargestellt, im On-line-Betrieb oder im Off-line-Betrieb arbeiten, wobei die Schnittstelle zwischen Farb-Abtaster und Farb-Recorder die Speicher-Schaltung 14 ist.

Falls eine Farbbild-Kombination oder Farbbild-Montage aufgezeichnet werden soll, werden die dazu benötigten Aufzeichnungsdaten im On-line-Betrieb durch Abtasten einer nach einem Layout-Plan montierten Ganzseiten-Vorlage oder durch eine nach einem Layout-Plan gesteuerten Abtastung von Einzelvorlagen gewonnen und in der Speicher-Schaltung 14 zwischengespeichert. Beim Off-line-Betrieb wurden die Aufzeichnungsdaten beispielsweise durch eine elektronische Seitenmontage nach einem Layout-Plan in einer Bildverarbeitungsanlage gewonnen, die nach der DE-A 21 61 038 aufgebaut sein kann.

**Patentansprüche**

1. Verfahren zum Aufzeichnen von Farbbildern von Farbvorlagen auf einem Farbmaterial mit einer Farb-Aufzeichnungseinheit, bei dem

a) eine Farbvorlage zur Gewinnung von Farbwerten (R, G, B) punkt- und zeilenweise optoelektronisch und trichromatisch abgetastet wird,

b) die Farbwerte (R, G, B) in Ansteuerwerte (r, g, b) für die Farb-Aufzeichnungseinheit umgewandelt werden und bei dem

c) das Farbmaterial durch das farbige Licht der Farb-Aufzeichnungseinheit punkt- und zeilenweise belichtet wird,
dadurch gekennzeichnet, daß

d) die Farbwerte (R, G, B) durch eine Farb- und/oder Gradationskorrektur in Soll-Farbdichtewerte (D$'_Y$, D$'_M$, D$'_C$ für die Farbschichten des Farbmaterials umgewandelt werden, wobei jedes Tripel von Soll-Farbdichtewerten (D$'_Y$, D$'_M$, D$'_C$) eine auf dem Farbmaterial zu erzeugende Soll-Farbe repräsentiert,

e) vor der Farbbild-Aufzeichnung mit der Farb-Aufzeichnungseinheit eine Linearisierung der Farbgradationen der Farbschichten des Farbmaterials durchgeführt wird, indem

e$_1$) gestufte Soll-Farbdichtewerte (D$'_Y$, D$'_M$, D$'_C$) vorgegeben und in gestufte Ansteuerwerte (r, g, b) für die Farb-Aufzeichnungseinheit umgewandelt werden,

e$_2$) mit den gestuften Ansteuerwerten (r, g, b) ein Farbkeil für jede Farbschicht des Farbmaterials aufgezeichnet wird,

e$_3$) die aufgezeichneten Farbkeile zur Bestimmung der Ist-Farbdichtewerte dichtemäßig ausgemessen werden, sowie

e$_4$) die ausgemessenen Ist-Farbdichtewerte und die Soll-Farbdichtewerte paarweise derart einander zugeordnet werden, daß durch Ausgabe der Ist-Farbdichtewerte anstelle der Soll-Farbdichtewerte die gewünschten Soll-Farben aufgrund der Farbgradationen auch tatsächlich erzeugt werden,

f) die Soll-Farbdichtewerte und die Ansteuerwerte für das farbige Licht entsprechend der Sensibilisierung des verwendeten Farbmaterials einander zugeordnet werden und

g) bei der Farbbild-Aufzeichnung aus den Soll-Farbdichtewerten die Ansteuerwerte (r, g, b) für die Farb-Aufzeichnungseinheit zur Steuerung der Intensität des farbigen Lichtes erzeugt werden.

2. Verfahren nach Anspruch 1, dadurch gekennzeichnet, daß

a) die Farbwerte (R, G, B) durch eine Standard-Korrektur in Farbdichtewerte (D$_Y$, D$_M$, D$_C$) umgewandelt werden und

b) aus den Farbdichtewerte (D$_Y$, D$_M$, D$_C$) durch eine Nachkorrektur die Soll-Farbdichtewerte (D$'_Y$, D$'_M$, D$'_C$) gewonnen werden.

3. Verfahren nach Anspruch 1 oder 2, dadurch gekennzeichnet, daß

a) jedem Tripel von Farbwerten (R, G, B) einer in der Farbvorlage abgetasteten Farbe ein nach den eingestellten Korrekturparametern berechnetes Tripel von Soll-Farbdichtewerten (D$'_Y$, D$'_M$, D$'_C$) zugeordnet wird und

b) während der Farbbild-Aufzeichnung die zugeordneten Soll-Farbdichtewerte (D$'_Y$, D$'_M$, D$'_C$) durch die entsprechenden Farbwerte (R, G, B) aufgerufen und anstelle der Farbwerte weiterverarbeitet werden.

4. Verfahren nach Anspruch 3, dadurch gekennzeichnet, daß die Zuordnung von Soll-Farbdichtewerten (D$'_Y$, D$'_M$, D$'_C$) und Farbwerten (R, G, B) vor der Farbbild-Aufzeichnung für alle theoretisch möglichen Farben vorgenommen wird.

5. Verfahren nach Anspruch 3, dadurch gekennzeichnet, daß

a) die Zuordnung von Soll-Farbdichtewerten (D$'_Y$, D$'_M$, D$'_C$) und Farbwerten (R, G, B) vor der Farbbild-Aufzeichnung nur für einen Teil der theoretisch möglichen Farben als Stützwerte vorgenommen wird und

b) die zu den durch Abtastung der Farbvorlage gewonnenen Farbwerten (R, G, B) gehörenden Soll-Farbdichtewerte (D$'_Y$, D$'_M$, D$'_C$) während der Farbbild-Aufzeichnung aus den Stützwerten durch Interpolation gewonnen werden.

6. Verfahren nach einem der Ansprüche 1-5, dadurch gekennzeichnet, daß die Soll-Farbdichtewerte (D$'_Y$, D$'_M$, D$'_C$) durch die zugeordneten Farbwerte (R, G, B) adressierbar gespeichert werden.

7. Verfahren nach einem der Ansprüche 1-6, dadurch gekennzeichnet, daß die für die Aufzeichnung einer Farbvorlage eingestellten Korrekturparameter abgelegt und bei nochmaliger Aufzeichnung der Farbvorlage wiederverwendet werden.

8. Verfahren nach einem der Ansprüche 1-7, dadurch gekennzeichnet, daß

a) Tripel von charakteristischen Soll-Farbdichtewerten ($D'_Y$, $D'_M$, $D'_C$) aufgerufen und entsprechende Farbfelder auf dem zur Aufzeichnung des Farbbildes vorgesehenen Farbmaterial erzeugt werden,

b) zur nochmaligen Aufzeichnung des Farbbildes die Farbfelder abgetastet und für jedes Farbfeld ein Tripel von Farbwerten (R, G, B) gewonnen wird und

c) für jedes Farbfeld die zugehörigen Tripel von Farbwerten (R, G, B) und Soll-Farbdichtewerten ($D'_Y$, $D'_M$, $D'_C$) paarweise einander zugeordnet werden.

9. Verfahren nach einem der Ansprüche 1-8, dadurch gekennzeichnet daß die durch Abtastung der Farbvorlage gewonnenen Bildwerte gespeichert und zur Farbbild-Aufzeichnung ausgelesen werden.

10. Verfahren nach einem der Ansprüche 1-9, dadurch gekennzeichnet, daß das Farbbild mit einem gegenüber der Farbvorlage veränderten Maßstab aufgezeichnet wird.

11. Verfahren nach einem der Ansprüche 1-10, dadurch gekennzeichnet, daß die Soll-Farbdichtewerte ($D'_Y$, $D'_M$, $D'_C$) oder die Ansteuerwerte (r, g, b) zur wahlweisen Aufzeichnung auf Positiv- und Negativ-Farbmaterial invertiert werden.

12. Anordnung zum Aufzeichnen von Farbbildern von Farbvorlagen auf einem Farbmaterial, bestehend aus

a) einem Farb-Abtaster (3) zur Gewinnung von Farbwerten (R, G, B) von Punkten einer Farbvorlage,

b) einer Farb-Aufzeichnungseinheit (20) für Farbbilder, welche durch Ansteuerwerte (r, g, b) je Farbbildpunkt steuerbar ist, und aus

c) einem an den Farb-Abtaster (3) und die Farb-Aufzeichnungseinheit (20) angeschlossenen Farb-Umsetzer zur Umsetzung der Farbwerte (R, G, B) in die Ansteuerwerte (r, g, b), dadurch gekennzeichnet, daß

d) der Farb-Umsetzer folgende Komponenten aufweist :

$d_1$) eine Korrektur-Schaltung (13 ; 16) zur Umwandlung der Farbwerte (R, G, B) in Soll-Farbdichtewerte ($D'_Y$, $D'_M$, $D'_C$),

$d_2$) eine an die Korrektur-Schaltung (13 ; 16) angeschlossene Linearisierungs-Stufe (17) zur Farbdichte-Linearisierung des Farbmaterials und zur Erzeugung der Ansteuerwerte (r, g, b), sowie

$d_3$) einen Farbdichte-Geber (19), welcher an die Linearisierungs-Stufe (17) angeschlossen ist und gestufte Soll-Farbdichtewerte zur Aufzeichnung von Farbkeilen auf dem Farbmaterial zur Bestimmung der Farbgradationen aufrufen kann, und daß

e) die Farb-Aufzeichnungseinheit (20) aus folgenden Komponenten besteht :

$e_1$) mindestens einer Lichtquelle (21, 22, 23) zur Erzeugung von Licht mit drei Spektralkomponenten,

$e_2$) Lichtmodulatoren (27, 28, 29), welche in den Lichtwegen angeordnet und mit den Ansteuerwerten (r, g, b) beaufschlagt sind, um die Intensitäten der drei Spektralkomponenten des Lichtes in Abhängigkeit der Ansteuerwerte zu ändern, sowie

$e_3$) optische Mittel (33, 34, 35, 37) zur Fokussierung des farbigen Lichts auf das Farbmaterial.

13. Anordnung nach Anspruch 12, dadurch gekennzeichnet, daß dem Farb-Abtaster (3) eine Speicher-Schaltung (14) für die durch Abtastung der Farbvorlage gewonnenen Farbwerte nachgeschaltet ist.

14. Anordnung nach Anspruch 12 oder 13, dadurch gekennzeichnet, daß die Speicher-Schaltung (14) als Schaltung zur elektronischen Maßstabsänderung zwischen Farbvorlage und Farbbild ausgebildet ist.

15. Anordnung nach einem der Ansprüche 12-14, dadurch gekennzeichnet, daß die Korrektur-Schaltung (13 ; 16) als Speicher für die Soll-Farbdichtewerte ($D'_Y$, $D'_M$, $D'_C$) ausgebildet ist, welcher durch die zugeordneten Farbwerte (R, G, B) adressierbar ist.

16. Anordnung nach einem der Ansprüche 12-14, dadurch gekennzeichnet, daß die Korrektur-Schaltung (13 ; 16) aus einem Stützwert-Speicher für Soll-Farbdichtewerte ($D'_Y$, $D'_M$, $D'_C$), welcher durch zugeordnete Farbwerte (R, G, B) adressierbar ist, und aus einer Interpolations-Stufe besteht.

17. Anordnung nach einem der Ansprüche 12-16, dadurch gekennzeichnet, daß der Farb-Umsetzer eine Amplituden-Invertierungsstufe aufweist.

18. Anordnung nach einem der Ansprüche 12-17, dadurch gekennzeichnet, daß die Lichtquelle mindestens ein Laser ist.

**Claims**

1. Process of recording coloured pictures of coloured originals on a colour material by means of a colour recording unit, in which

a) a colour original is scanned opto-electronically and trichromatically line-by-line and dot-by-dot to obtain colour values (R, G, B)

b) the colour values (R, G, B) are converted into control values (r, g, b) for the colour recording unit and

c) the colour material is exposed dot-by-dot and line-by-line by the coloured light of the colour recording unit,
characterized in that

d) the colour values (R, G, B) are converted into nominal colour density values ($D'_Y$, $D'_M$, $D'_C$) for the chromatic layers of the colour material by means of a colour and/or gradation correction, each triplet of nominal colour density values ($D'_Y$, $D'_M$, $D'_C$) representing a nominal colour to be generated on the colour material,

e) a linearisation of the colour gradations of the chromatic layers of the colour material is performed by means of the colour recording unit before recording the coloured picture, by

$e_1$) presetting stepped nominal colour density

values ($D'_Y$, $D'_M$, $D'_C$) and converting these into stepped control values (r, g, b) for the colour recording unit,

$e_2$) recording a colour wedge for each chromatic layer of the colour material with the stepped control values (r, g, b).

$e_3$) performing a measuring operation in respect of density of the colour wedges recorded to determine the actual colour density values, as well as

$e_4$) co-ordinating the measured actual colour density values and the nominal colour density values in pairs, in such manner that the desired actual colours based on the colour gradations are actually obtained by emittance of the actual colour density values instead of the nominal colour density values,

f) the nominal colour density values and the control values for the chromatic light are co-ordinated with each other according to the sensitisation of the colour material utilised, and

g) the control values (r, g, b) for the colour recording unit are generated to control the intensity of the chromatic light during the coloured picture recording operation based on the nominal colour density values.

2. Process according to claim 1, characterized in that

a) the colour values (R, G, B) are converted by a standard correction into colour density values ($D'_Y$, $D'_M$, $D'_C$), and

b) the nominal colour density values ($D'_M$, $D'_Y$, $D'_C$) are obtained by a post-correction from the colour density values ($D'_Y$, $D'_M$, $D'_C$).

3. Process according to claim 1 or 2, characterized in that

a) a triplet of nominal colour density values ($D'_Y$, $D'_M$, $D'_C$) calculated on the basis of the correction parameters set up is allocated to each triplet or colour values (R, G, B) of a colour scanned in the coloured original, and

b) the co-ordinated nominal density values ($D'_Y$, $D'_M$, $D'_C$) are addressed by the corresponding colour values (R, G, B) and processed further instead of the colour values during the recording of the coloured picture.

4. Process according to claim 3, characterized in that the co-ordination of the nominal density values ($D'_Y$, $D'_M$, $D'_C$) and colour values (R, G, B) is established for all the theoretically possible colours, prior to the recording of coloured pictures.

5. Process according to claim 3, characterized in that

a) the co-ordination of nominal colour density values ($D'_Y$, $D'_M$, $D'_C$) and colour values (R, G, B) prior to coloured picture recording is established as supporting values for only a part of the theoretically possible colours, and

b) the nominal colour density values ($D'_Y$, $D'_M$, $D'_C$) co-ordinated to the colour values (R, G, B) obtained by scanning the coloured original are obtained from the supporting values by interpolation during the recording of the coloured picture.

6. Process according to one of the claims 1 to 5, characterized in that the nominal colour density values ($D'_Y$, $D'_M$, $D'_C$) are stored for addressability via the co-ordinated colour values (R, G, B).

7. Process according to one of the claims 1 to 6, characterized in that the correction parameters set up for recording a coloured original are stored and re-used during repeated recording of the coloured original.

8. Process according to one of the claims 1 to 7, characterized in that

a) triplets of characteristic nominal colour density values ($D'_Y$, $D'_M$, $D'_C$) are addressed and corresponding colour areas are produced on the colour material provided for recording the coloured picture,

b) for repeated recording of the coloured picture, the colour areas are scanned and a triplet of colour values (R, G, B) is obtained for each other colour area, and

c) the corresponding triplets of colour values (R, G, B) and nominal colour density values ($D'_Y$, $D'_M$, $D'_C$) are co-ordinated with each other in pairs, for each colour area.

9. Process according to one of the claims 1 to 8, characterized in that the image values obtained by scanning the coloured original are stored and read out for recording the coloured picture.

10. Process according to one of the claims 1 to 9, characterized in that the coloured picture is recorded on a scale altered as compared to the coloured original.

11. Process according to one of the claims 1 to 10, characterized in that the nominal colour density values ($D'_Y$, $D'_M$, $D'_C$) or the control values (r, g, b) are inverted for optional recording on positive or negative colour material.

12. System for recording coloured pictures of coloured originals on a colour material comprising

a) a colour scanner (3) for obtaining colour values (R, G, B) of dots of a coloured original,

b) a colour recording unit (20) for coloured pictures, which is controllable by means of control values (r, g, b) for each colour picture dot, and

c) a colour transducer connected to the colour scanner (3) and the colour recording unit (20) for conversion of the colour values (R, G, B) into the control values (r, g, b) characterized in that

d) the colour transducer comprises the following components :

$d_1$) a correction circuit (13, 16) for conversion of the colour values (R, G, B) into nominal colour density values ($D'_Y$, $D'_M$, $D'_C$),

$d_2$) a linearisation stage (17) connected to the correction circuit (13 ; 16) for colour density linearisation of the colour material and for generating the control values (r, g, b), as well as

$d_3$) a colour density emitter (19) which is connected to the linearisation stage (17) and is arranged to address stepped nominal colour density values for recording colour wedges on the colour material for determination of the colour gradation, and that

e) the colour recording unit (20) comprises the following components :

e₁) at least one light source (21, 22, 23) for generating light comprising three spectrum components,

e₂) light modulators (27, 28, 29) which are placed in the light paths and acted upon by the control values (r, g, b) to vary the intensities of the three spectrum components of the light as a function of the control values, as well as

e₃) optical means (33, 34, 35, 37) for focussing the coloured light on the colour material.

13. System according to claim 12, characterized in that a storage circuit (14) for the colour values obtained by scanning the coloured original is post-connected to the colour scanner (3).

14. System according to claim 12 or 13, characterized in that a storage circuit (14) is arranged as a circuit for electronic scale alteration between the coloured original and the coloured picture.

15. System according to one of the claims 12 to 14, charaterised in that the correction circuit (13 ; 16) is constructed as a memory for the nominal colour density values ($D'_Y$, $D'_M$, $D'_C$) which is addressable via the associated colour values (R, G, B).

16. System according to one of the claims 12 to 14, characterized in that the correction circuit (13 ; 16) comprises a support value memory for nominal colour density values ($D'_Y$, $D'_M$, $D'_C$), which may be addressed via associated colour values (R, G, B), and an interpolation stage.

17. System according to one of the claims 12 to 16, characterized in that the colour transducer comprises an amplitude inversion stage.

18. System according to one of the claims 12 to 17, characterized in that the light source is at least one laser.

**Revendications**

1. Procedé pour enregistrer des images en couleurs de modèles en couleurs sur un matériau coloré avec une unité d'enregistrement en couleur, procédé dans lequel :

a) un modèle en couleurs est balayé opto-électroniquement et trichromatiquement par points et par lignes pour obtenir des valeurs chromatiques (R, G, B),

b) les valeurs chromatiques (R, G, B) sont converties en valeurs de commande (r, g, b) pour l'unité d'enregistrement en couleurs,

c) le matériau coloré est exposé en points et lignes par la lumière colorée de l'unité d'enregistrement en couleurs,

procédé caractérisé en ce que :

d) les valeurs chromatiques (R, G, B) sont converties par une correction de couleurs et/ou de gradations en valeurs de consigne de densité colorimétrique ($D'_Y$, $D'_M$, $D'_C$) pour les couches colorées du matériau coloré, chaque triplet de valeurs de consigne de densité colorimétrique ($D'_Y$, $D'_M$, $D'_C$) représentant une couleur de consigne devant être obtenue sur le matériau coloré,

e) avant l'enregistrement de l'image en couleur avec l'unité d'enregistrement en couleurs, on procède à une linéarisation des gradations de couleurs des couches colorées du matériau coloré, en ce que :

e₁) des valeurs de consigne échelonnées de densité colorimétrique ($D'_Y$, $D'_M$, $D'_C$) sont prédéfinies et sont converties en valeurs échelonnées de commande (r, g, b) pour l'unité d'enregistrement en couleurs,

e₂) avec ces valeurs de commande échelonnées (r, g, b) est enregistré un éventail de couleurs pour chaque couche colorée du matériau coloré,

e₃) les éventails de couleurs ainsi enregistrés, sont mesurés en densité pour déterminer les valeurs réelles la densité colorimètrique,

e₄) les valeurs réelles de densité colorimétrique ainsi mesurées et les valeurs de consigne de densité colorimétrique sont associées les unes aux autres par paires, de façon que par délivrance des valeurs réelles de densité colorimétrique au lieu des valeurs de consigne de densité colorimètrique, les couleurs de consigne souhaitées, soient également effectivement obtenues sur la base des gradations de couleurs,

f) les valeurs de consigne de densité colorimètrique et les valeurs de commande pour la lumière colorée, sont associées les unes aux autres, de façon correspondante à la sensibilisation du matériau coloré utilisé,

g) lors de l'enregistrement de l'image en couleurs à partir des valeurs de consigne de densité colorimètrique, les valeurs de commande (r, g, b) pour l'unité d'enregistrement en couleurs, sont produites pour commander l'intensité de la lumière colorée.

2. Procédé selon la revendication 1, caractérisé en ce que :

a) les valeurs colorimètriques (R, G, B) sont converties en valeurs de densité colorimètrique ($D_Y$, $D_M$, $D_C$) par une correction standard,

b) à partir des valeurs de densité colorimètrique ($D_Y$, $D_M$, $D_C$) les valeurs de consigne de densité colorimètrique ($D'_Y$, $D'_M$, $D'_C$) sont obtenues par une correction ultérieure.

3. Procédé selon la revendication 1 ou 2, caractérisé en ce que :

a) à chaque triplet de valeurs de couleurs (R, G, B) d'une couleur balayée sur le modèle en couleurs, est associé un triplet de valeur de consigne de densité colorimètrique ($D'_Y$, $D'_M$, $D'_C$) calculé selon les paramètres de correction établis,

b) pendant l'enregistrement de l'image en couleurs, les valeurs de consigne de densité colorimètrique ($D'_Y$, $D'_M$, $D'_C$) associées sont appelées par les valeurs de couleurs correspondantes (R, G, B) et sont traitées de façon complémentaire à la place des valeurs de couleurs.

4. Procédé selon la revendication 3, caractérisé en ce que l'association des valeurs de consigne de densité colorimètrique ($D'_Y$, $D'_M$, $D'_C$) et les valeurs de couleurs (R, G, B) est effectuée pour toutes les couleurs théoriquement possibles avant l'enregistrement de l'image en couleurs.

5. Procédé selon la revendication 3, caractérisé en ce que :

a) l'association des valeurs de consigne de densité colorimètrique ($D'_Y$, $D'_M$, $D'_C$) et des valeurs de couleurs (R, G, B) avant l'enregistrement de l'image en couleurs, n'est effectuée en tant que valeur de soutien que pour une partie des couleurs théoriquement possibles,

b) les valeurs de consigne de densité colorimètrique ($D'_Y$, $D'_M$, $D'_C$) appartenant aux valeurs de couleurs (R, G, B) obtenues par balayage du modèle en couleurs, sont obtenues pendant l'enregistrement de l'image en couleurs à partir des valeurs de soutien par interpolation.

6. Procédé selon une des revendications 1 à 5, caractérisé en ce que les valeurs de consigne de densité colorimètrique ($D'_Y$, $D'_M$, $D'_C$) sont mémorisées en étant susceptibles d'être adressées par les valeurs de couleurs (R, G, B) qui leur sont associées.

7. Procédé selon une des revendications 1 à 6, caractérisé en ce que les paramètres de correction établis pour l'enregistrement d'un modèle en couleurs, sont déposés et à nouveau utilisés lors d'un nouvel enregistrement du modèle en couleurs.

8. Procédé selon une des revendications 1 à 7, caractérisé en ce que :

a) des triplets de valeurs caractéristiques de consigne de densité colorimètrique ($D'_Y$, $D'_M$, $D'_C$) sont appelés et des champs de couleurs correspondants sont obtenus sur le matériau coloré prévu pour l'enregistrement de l'image en couleurs,

b) pour un nouvel enregistrement de l'image en couleurs, les champs de couleurs sont balayés, et pour chaque champ de couleurs un triplet de valeurs de couleurs (R, G, B) est obtenu,

c) pour chaque champ de couleurs, les triplets associés de valeurs de couleurs (R, G, B) et de valeurs de consigne de densité colorimètrique ($D'_Y$, $D'_M$, $D'_C$) sont associés les uns aux autres par paires.

9. Procédé selon une des revendications 1 à 8, caractérisé en ce que les valeurs d'images obtenues par balayage du modèle en couleurs, sont mémorisées et sont lues pour l'enregistrement de l'image en couleurs.

10. Procédé selon une des revendications 1 à 9, caractérisé en ce que l'image en couleurs est enregistrée avec une échelle modifiée par rapport au modèle en couleurs.

11. Procédé selon une des revendications 1 à 10, caractérisé en ce que les valeurs de consigne de densité colorimètrique ($D'_Y$, $D'_M$, $D'_C$) ou bien les valeurs de commande (r, g, b) sont inversées pour enregistrer au choix, sur un matériau coloré positif et sur un matériau coloré négatif.

12. Dispositif pour enregistrer des images en couleurs de modèles en couleurs sur un matériau coloré, dispositif comportant :

a) un dispositif de balayage en couleurs (3) pour obtenir des valeurs de couleurs (R, G, B) de points d'un modèle en couleurs,

b) une unité d'enregistrement en couleurs (20) pour des images en couleurs, qui est susceptible d'être commandée par des valeurs de commande (r, g, b) par points d'image en couleurs,

c) un convertisseur de couleurs raccordé au dispositif de balayage en couleurs (3) et à l'unité d'enregistrement en couleurs (20) pour convertir les valeurs de couleurs (R, G, B) en valeurs de commande (r, g, b), dispositif caractérisé en ce que :

d) le convertisseur de couleurs comporte les composants suivants :

$d_1$) un circuit de correction (13 ; 16) pour convertir les valeurs de couleurs (R, G, B) en valeurs de consigne de densité colorimètrique ($D'_Y$, $D'_M$, $D'_C$),

$d_2$) un étage de linéarisation (17) raccordé au circuit de correction (13 ; 16) pour la linéarisation des densités de couleurs du matériau coloré, et pour obtenir les valeurs de commande (r, g, d),

$d_3$) un émetteur (19) de densité de couleurs, qui est raccordé à l'étage de linéarisation (17), et qui peut appeler des valeurs de consigne échelonnées de densité colorimètrique pour l'enregistrement d'éventails de couleurs sur le matériau coloré, afin de déterminer les gradations de couleurs,

e) l'unité d'enregistrement en couleurs (20) comporte les composants suivants :

$e_1$) au moins une source de lumière (21, 22, 23) pour obtenir de la lumière avec trois composantes spectrales,

$e_2$) des modulateurs de lumière (27, 28, 29) qui sont disposés sur le trajet de la lumière, et qui sont alimentés avec les valeurs de commande (r, g, b) pour modifier les intensités des trois composantes spectrales de la lumière en fonction des valeurs de commande,

$e_3$) des moyens optiques (33, 34, 35, 37) pour la focalisation de la lumière colorée sur le matériau coloré.

13. Dispositif selon la revendication 12, caractérisé en ce que, un circuit de mémoire (14) pour les valeurs de couleurs obtenues par balayage du modèle en couleurs, est branché à la suite du dispositif de balayage de couleurs (3).

14. Dispositif selon la revendication 12 ou 13, caractérisé en ce que le circuit de mémoire (14) revêt la forme d'un circuit pour la modification électronique de l'échelle entre le modèle en couleurs et l'image en couleurs.

15. Dispositif selon une des revendications 12 à 14, caractérisé en ce que le circuit de correction (13 ; 16) revêt la forme d'une mémoire pour les valeurs de consigne de densité colorimètrique ($D'_Y$, $D'_M$, $D'_C$), qui sont adressables par les valeurs de couleurs (R, G, B) qui leur sont associées.

16. Dispositif selon une des revendications 12 à 14, caractérisé en ce que le circuit de correction (13 ; 16) comporte une mémoire de valeur de soutien pour les valeurs de consigne de densité colorimètrique ($D'_Y$, $D'_M$, $D'_C$) qui sont adressables par les valeurs de couleurs (R, G, B) qui leur sont associées, et un étage d'interpolation.

17. Dispositif selon une des revendications 12 à 16, caractérisé en ce que le convertisseur de couleurs comporte un étage d'inversion des amplitudes,

18. Dispositif selon une des revendications 12 à 17, caractérisé en ce que la source de lumière est au moins un laser.

Fig.1